# EUROPÄISCHE PATENTSCHRIFT

(11) **EP 3 629 516 B1**
(45) Veröffentlichungstag und Bekanntmachung des Hinweises auf die Patenterteilung: **08.06.2022**
(21) Anmeldenummer: 19020532.8
(22) Anmeldetag: 17.09.2019
(51) Int. Cl.: H04L 9/08, G06F 21/32, H04L 9/32

(54) **DEZENTRALISIERTE IDENTITÄTSMANAGEMENT-LÖSUNG**
DECENTRALISED IDENTITY MANAGEMENT SOLUTION
SOLUTION DÉCENTRALISÉE DE GESTION D'IDENTITÉ

(30) Priorität: 26.09.2018 DE 102018007628
(43) Veröffentlichungstag der Anmeldung: 01.04.2020
(73) Patentinhaber: Giesecke+Devrient Mobile Security GmbH, 81677 München (DE)
(72) Erfinder: Schröder, Sönke, 80637 München (DE); Barthelmes, Andreas, 80637 München (DE)
(74) Vertreter: Giesecke + Devrient IP

(56) Entgegenhaltungen:
- WO-A1-2014/131557
- DE-A1-102015 207 765
- US-A1- 2018 083 928

## Beschreibung

Die vorliegende Erfindung ist auf ein Verfahren zur dezentralen Identitätsverwaltung von Benutzern gerichtet, welche es ermöglicht, dass die Benutzerdaten sicher, also insbesondere vertraulich, abgespeichert werden können. Zudem muss sich der Benutzer hierbei kein Passwort merken, und folglich weist das vorgeschlagene Verfahren eine hohe Benutzerakzeptanz auf. Die Erfindung ist ferner gerichtet auf eine entsprechend eingerichtete Systemanordnung sowie auf ein Computerprogrammprodukt, mit Steuerbefehlen, welche das vorgeschlagene Verfahren implementieren bzw. die Systemanordnung betreiben.

US 2018/0 144 114 A1 zeigt ein Verfahren zum Absichern von Transaktionen, wobei ein Passwort in Abhängigkeit eines privaten Schlüssels erzeugt wird.

WO 2017/044 554 A1 zeigt eine Blockchain-Transaktion, bei der auch biometrische Daten zum Einsatz kommen. Darüber hinaus wird der private Schlüssel anhand von biometrischen Daten erstellt.

WO 2017/066 002 A1 zeigt ein Verschlüsseln und Entschlüsseln, wobei geometrische Daten zum Einsatz kommen.

US 2017/0111175 A1 zeigt ein computerimplementiertes Verfahren, wobei ein Identitätsmanagement unter Verwendung von kryptographischen Verfahren gezeigt wird.

US 2018/083928 A1 ist weiterer Stand der Technik.

Aus dem Stand der Technik ist die sogenannte Blockchain-Technologie bekannt, nach der kryptographisch verkettete Listen geschaffen werden. Die abzuspeichernden Datensätze werden also in Relation gesetzt, und die jeweilige Relation wird verschlüsselt. Darüber hinaus werden die Datensätze bzw. Teile der verketteten Liste redundant abgespeichert, so dass ein Überprüfen der Validität der zugrundeliegenden Daten möglich wird. Die Redundanz in der Datenhaltung sorgt dafür, dass unterschiedliche Instanzen der Datensätze abgeprüft werden können und somit Abweichungen ermittelt werden können. Insgesamt wird die Mehrheit einer bestimmten Belegung von Daten als valide angesehen und einzelne Abweichungen werden ignoriert. Somit ist es einem Fälscher nur schwer möglich, Daten zu manipulieren, da diese eben redundant vorliegen und gemäß der Mehrheit einer Datenbelegung von der Richtigkeit der Daten ausgegangen werden kann.

Ferner sind biometrische Verfahren bekannt, welche für jeden menschlichen Benutzer eine eindeutige Kennung erzeugen. So können beispielsweise Fingerabdrücke oder ein Abbild einer Iris als ganz spezifische menschliche Merkmale verwendet werden und sodann eine eindeutige Information abgeleitet werden, welche genau einem menschlichen Benutzer zuzuordnen ist.

Identitäten werden typischerweise physisch, beispielsweise in Form von Ausweisen oder Führerscheinen attestiert. Zusätzlich gibt es vielerlei Ansätze digitaler Identitäten wie z.B. den neuen Personalausweis. Diese Ansätze lassen sich wiederum in dezentralisierte Ansätze (lokale Speicherung beim Benutzer, Smart-Card, Ausweis etc.) und zentralisierte Ansätze (Speicherung auf dem Server des Unternehmens, das die Identitäten verwaltet) einteilen. Üblicherweise werden persönliche Daten zusammengefasst und verschlüsselt abgelegt.

Dezentralisierte Identitätslösungen haben den Nachteil, dass der Schutz der Daten auf dem jeweiligen Nutzer beruht. Durch unsichere oder gleiche Passwörter gelangen immer wieder erhebliche Mengen an sensiblen Daten in die Hände von Angreifern. in diesen Angriffsszenarien kann die Sicherheit der Verschlüsselung die Integrität der Daten nur bis zu einem gewissen Grad sicherstellen.

Zentralisierte Lösungen haben den Nachteil, dass alle sensiblen Daten der Nutzer an einem Ort abgelegt sind und der Angreifer einen hohen Anreiz hat, die jeweiligen Sicherheitsmechanismen auszuhebeln, um an die Daten zu gelangen. Zusätzlich sind sensible Daten einem hohen Verlustrisiko (z.B. durch versehentliches Löschen etc.) ausgesetzt.

Beide Lösungen haben aktuell den Nachteil, dass der kryptographische Schlüssel abgelegt werden muss und so ein lukratives Ziel für Angreifer darstellt. Zusätzlich werden Informationen aktuell auf Benutzerbasis abgespeichert. Hat der Angreifer also den Schlüssel für den jeweiligen Account kann er alle Informationen gesammelt entschlüsseln.

Ein weiteres Problem beider Lösungen ist aktuell, dass Transaktionsinformationen (wer hat welche Identität angefordert, was hat er angefordert etc.) meist nur auf der Service- und/oder Benutzerseite gespeichert werden und so eine Manipulation dieser Informationen relativ einfach ist.

Grundsätzlich besteht auch immer das Problem, dass Serviceprovider tendenziell zu viele Informationen über den Nutzer erhalten, die im Zweifel gar nicht benötigt werden (ein Online- Shop Betreiber für Alkohol muss die Lieferadresse, Namen und Alter des Benutzers kennen aber nicht alle sonstigen Information wie z.B. Augenfarbe etc.)

Aktuelle Lösungen besitzen die Eigenschaft, dass die Authentisierung auf dem Gerät nicht an die Schlüsselgenerierung gekoppelt ist und die Authentisierung üblicherweise auf dem Gerät des Nutzers oder auf dem Server des Unternehmens, welches das Identitätsmanagement betreibt, stattfindet.

Demgemäß ist es eine Aufgabe der vorliegenden Erfindung, ein verbessertes Verfahren bereitzustellen, welches mit geringem technischen Aufwand zu implementieren ist und dennoch eine hohe Benutzerakzeptanz mit sich führt. Ferner soll das vorgeschlagene Verfahren eine Vertraulichkeit persönlicher Angaben respektieren und zudem besonders fälschungssicher sein. Ferner ist es eine Aufgabe der vorliegenden Erfindung, eine entsprechend eingerichtete Systemanordnung bereitzustellen. Darüber hinaus ist es eine Aufgabe der vorliegenden Erfindung, ein Computerprogrammprodukt bereitzustellen, mit Steuerbefehlen, welche das vorgeschlagene Verfahren implementieren bzw. die Systemanordnung betreiben.

Die Aufgabe wird gelöst mit den Merkmalen der unabhängigen Patentansprüche. Weitere vorteilhafte Ausgestaltungen sind in den Unteransprüchen angegeben.

Demgemäß wird ein Verfahren zur dezentralen Identitätsverwaltung von Benutzern vorgeschlagen, aufweisend ein deterministisches Generieren eines geheimen Schlüssels in Abhängigkeit einer Startinformation, ein Verschlüsseln von Teilmengen von bereitgestellten Benutzerinformationen, derart, dass alle Benutzerinformationen verschlüsselt werden, ein Verwerfen des geheimen Schlüssels, ein verteiltes Abspeichern der Teilmengen der Benutzerinformationen und ein erneutes Generieren des geheimen Schlüssels zum Entschlüsseln mindestens einer Teilmenge der bereitgestellten Benutzerinformationen.

Das vorgeschlagene Verfahren dient der dezentralen Identitätsverwaltung, da benutzerbezogene Daten abgespeichert werden und dies verteilt in einem Netzwerk erfolgt. Bei dem Netzwerk kann es sich um ein Rechnernetzwerk handeln, wie es beispielsweise das Internet vorsieht. Die dezentrale Speicherung sieht vor, dass die Benutzerdaten nicht auf einem einzigen Server abgelegt werden, sondern aufgespalten werden und sodann auf diversen Recheneinheiten, beispielsweise Servern, abgelegt werden.

Das vorgeschlagene Verfahren ist deshalb für die Identitätsverwaltung vorteilhaft, da durch die Aufteilung der Daten lediglich diejenigen Daten bereitgestellt werden können, welche tatsächlich auch angefragt werden. Wird beispielsweise eine erste Teilmenge auf einem ersten Server hinterlegt und eine zweite Teilmenge auf einem zweiten Server, so ist bei einer Anfrage an den ersten Server der zweite Server nicht anzusprechen, und insofern ist das Risiko eines Angriffs minimiert. Der Angreifer müsste, um an alle Daten zu kommen, den ersten und den zweiten Server angreifen. Da vorliegend jedoch die Teilmengen auf unterschiedlichen Servern sind, ist es einem Angreifer unmöglich, an alle abgespeicherten Daten zu gelangen, da hierbei auch alle verwendeten Server anzugreifen wären. Folglich können also auf den verwendeten Recheneinheiten unterschiedliche Sicherheitsmechanismen implementiert werden, und einem Angreifer wird somit erschwert, an alle Daten des Benutzers zu gelangen.

Gerade das Abspeichern von Benutzerdaten ist sehr vertraulich, weshalb das vorgeschlagene Verfahren besonders geeignet ist. Bei Benutzern handelt es sich um menschliche Benutzer, welche mittels einer Datenschnittstelle ihre persönlichen Daten bereitstellen. Diese werden erfindungsgemäß verarbeitet und abgespeichert.

Um die Benutzerdaten zu verschlüsseln, erfolgt ein deterministisches Generieren eines geheimen Schlüssels in Abhängigkeit einer Startinformation. Ein deterministisches Erzeugen des Schlüssels ist deshalb vorteilhaft, da es ein erfindungsgemäßer Beitrag ist, dass der Schlüssel verworfen wird und zu einem späteren Zeitpunkt neu generiert wird. Insofern ist es erfindungsgemäß vorteilhaft, dass der geheime Schlüssel wiederherstellbar ist und folglich die Benutzerdaten wieder entschlüsselt werden können.

Als Startinformation kann hierbei eine Zufallszahl oder ein biometrisches Merkmal dienen. Die Zufallszahl kann durch einen Zufallszahlgenerator, vorzugsweise durch einen Pseudozufallszahlgenerator, erzeugt werden. Ein Vorteil eines solchen Erzeugens einer Pseudozufallszahl ist es, dass für einen externen Beobachter zwar generell eine Zufallszahl erzeugt wird, diese aber wiederum deterministisch erzeugt wird, so dass sich von unterschiedlichen Instanzen die Benutzerinformation entschlüsseln lässt. Beispielsweise kann eine Vielzahl von Zufallszahlen abgespeichert werden und sodann jeweils die nächste Zufallszahl verwendet werden. Dies stellt sicher, das eine Instanz, welche die Benutzerinformation verschlüsselt, die gleiche Zufallszahl erzeugt, wie eine andere Instanz, welche die Benutzerinformation verschlüsselt. Auf diese Art und Weise wird sichergestellt, dass zwar generell die Verschlüsselung der Daten anhand einer vermeintlichen Zufallszahl erfolgt, diese jedoch auf beiden Seiten deterministisch generiert werden kann, und somit kann eben auch zwischenzeitlich die geheime Information, also der geheime Schlüssel, verworfen werden.

Gleiches gilt für ein biometrisches Merkmal, welches so ebenfalls stets zu der gleichen Sicherheitsinformation, also dem geheimen Schlüssel, führt. Folglich kann auch auf der Seite des Verschlüssels und des Entschlüsselns der gleiche geheime Schlüssel wieder erzeugt werden, auch wenn dieser zwischenzeitlich verworfen wurde.

Sodann erfolgt ein Verschlüsseln von Teilmengen von bereitgestellten Benutzerinformationen derart, dass alle Benutzerinformationen verschlüsselt werden. Folglich werden also die Benutzerinformationen aufgeteilt und es werden Teilmengen gebildet. Wie diese Teilmengen zu bilden sind, kann entweder willkürlich durchgeführt werden, oder es wird eine logische Gruppierung von Daten manuell vorgenommen. Das Bilden von Teilmengen sieht auch nicht vor, dass die Teilmengen zwingendermaßen disjunkt sind, sondern vielmehr können jegliche denkbaren Teilmengen gebildet werden. Das Bilden der Teilmengen dient der verteilten Abspeicherung der Benutzerdaten, sodass also mehrere Instanzen in einem Rechnernetzwerk über mindestens einen Teil der Benutzerinformation verfügen. Folglich wird also sichergestellt, dass keine zentrale Datenverwaltung stattfindet, sondern vielmehr werden die Benutzerinformationen in Teilmengen über das Netzwerk verteilt.

Das Verschlüsseln von Teilmengen von bereitgestellten Benutzerinformationen erfolgt unter Verwendung des geheimen Schlüssels, wobei generell bekannte Verfahren Einsatz finden können. Der Fachmann kennt hierbei unterschiedliche kryptographische Verfahren, welche beispielsweise mittels eines öffentlichen Schlüssels und eines geheimen Schlüssels die Benutzerinformationen in verschlüsselte Daten überführen. Aufgrund der Tatsache, dass die Teilmengen nicht disjunkt sein müssen, ist es folglich auch möglich, dass einzelne Benutzerinformationen mehrfach vorliegen und somit eben auch mehrfach verschlüsselt werden müssen.

Da die Benutzerinformationen nunmehr verschlüsselt sind, kann der verwendete geheime Schlüssel nunmehr verworfen werden. Dies ist ein eigener Verfahrensschritt, da der geheime Schlüssel nicht einfach nur nicht weiterverwendet wird, sondern dieser wird aus Sicherheitsgründen tatsächlich auch aktiv unkenntlich gemacht. Dies kann mittels eines Löschens und eines Überschreibens erfolgen. Ein einfaches Löschen ist hierbei ausreichend, wobei ein Sicherheitsmangel darin bestehen kann, dass ein Angreifer entsprechende Speicherzellen wiederherstellen könnte, da bei einem Löschen oftmals nur die Verweise auf die Speicherzellen entfernt werden. Um den Schlüssel tatsächlich nachhaltig zu löschen, ist in diesem Falle ein Überschreiben der Datenfelder vorteilhaft. Nach dem Ausführen dieses Verfahrensschritts ist der Schlüssel somit nicht mehr vorhanden und folglich auch von einem Angreifer nicht mehr auszulesen. Somit liegen zwischenzeitlich lediglich die verschlüsselten Teilmengen vor, und der Angreifer hat keine Möglichkeit, an den Schlüssel heranzukommen. Dies wäre generell nur mit einer sehr aufwändigen Entschlüsselung möglich, wobei hier jedoch die Laufzeit über die Maßen stark zunehmen würde, da diverse Teilmengen vorliegen, welche über das Netzwerk verteilt sind. Somit ist das vorgeschlagene Verfahren besonders sicher.

Da die Teilmengen nunmehr verschlüsselt sind, können diese in dem Netzwerk abgespeichert werden und werden folglich persistent vorgehalten, wobei bei einer Anfrage auf die Benutzerinformation seitens eines weiteren Dienstes nicht stets alle Teilmengen wieder entschlüsselt werden müssen. Werden einzelne Benutzerinformationen angefragt, so wird lediglich diejenige Teilmenge bzw. diejenigen Teilmengen ausgewählt, welche die Benutzerinformation abspeichern. Somit werden lediglich die relevanten Teilmengen entschlüsselt und die Benutzerinformation nach einem erfolgreichen Entschlüsseln bereitgestellt. Nicht-angefragte Benutzerinformationen bleiben folglich verschlüsselt und die Vertraulichkeit der Daten bleibt gewahrt.

Um überhaupt die Teilmengen der Benutzerinformationen entschlüsseln zu können, erfolgt ein erneutes Generieren des geheimen Schlüssels anhand dessen sodann die Teilmengen entschlüsselt werden. Da der geheime Schlüssel generell deterministisch generiert wird, ist es folglich auch möglich, bei einem weiteren Generieren des geheimen Schlüssels in einer Abhängigkeit einer Startinformation genau denselben geheimen Schlüssel zu erzeugen und sodann die Daten zu entschlüsseln. Somit wird es erfindungsgemäß ermöglicht, dass der geheime Schlüssel nicht abgespeichert werden muss und im Gegenteil sogar verworfen werden kann. In einem abschließenden Verfahrensschritt wird der geheime Schlüssel einfach neu generiert und sodann zum Entschlüsseln verwendet. Dies hat den Vorteil, dass der geheime Schlüssel nur solange persistent abzuspeichern ist, wie er unbedingt benötigt wird. Generell muss kein persistentes Abspeichern des geheimen Schlüssels erfolgen, sondern vielmehr ist es sogar möglich, dass der geheime Schlüssel lediglich in einem Pufferspeicher temporär vorliegt. Folglich ist ein maximales Maß an Sicherheit gegeben.

Gemäß einem Aspekt der vorliegenden Erfindung liegt die Startinformation als eine Zufallszahl, eine Zufallsmatrix und/oder ein biometrisches Merkmal vor. Dies hat den Vorteil, dass unterschiedliche Verfahren bereitgestellt werden können, wie die Startinformation gebildet wird, und somit ist auch für einen Angreifer nicht ersichtlich, wie er zu dieser Startinformation gelangen soll. In einer besonders einfachen Ausgestaltung ist die Startinformation an sich die Zufallszahl, die Zufallsmatrix und/oder das biometrische Merkmal, wobei es bevorzugt ist, ein kryptographisches Verfahren zu verwenden, das in Abhängigkeit dieser Werte die Startinformation erzeugt. Auch ist es möglich, dass der geheime Schlüssel gleich der Startinformation ist, wobei bevorzugt die Startinformation als ein sogenannter Seed-Wert verwendet wird, aus dem die geheime Information, also der geheime Schlüssel, generiert wird.

Gemäß einem weiteren Aspekt der vorliegenden Erfindung umfasst das Verwerfen des geheimen Schlüssels ein Löschen, ein Überschreiben, ein Verändern und/oder ein Verschleiern des Schlüssels. Dies hat den Vorteil, dass der geheime Schlüssel aktiv verworfen wird, und insbesondere derart verworfen wird, dass er für einen Angreifer nicht auslesbar ist. Damit der Schlüssel nicht wiederhergestellt werden kann, ist ein Überschreiben besonders vorteilhaft. Das vorgeschlagene Verfahren soll sicherstellen, dass ein Dritter den geheimen Schlüssel nicht auslesen kann und dass zum Entschlüsseln der Daten folglich der geheime Schlüssel neu erzeugt werden muss.

Gemäß einem weiteren Aspekt der vorliegenden Erfindung erfolgt das verteilte Abspeichern redundant. Dies hat den Vorteil, dass die Benutzerinformationen mindestens teilweise mehrfach abgespeichert werden, und somit kann die Validität entsprechender Daten beurteilt werden. Es sind stets diejenigen Daten valide, deren Mehrheit einen bestimmten Wert aufweist. Weist ein einzelner Wert hiervon eine Abweichung auf, so kann dieser als falsch bzw. manipuliert erkannt werden. Zudem ist das redundante Abspeichern insofern vorteilhaft, als dass ein Angreifer nicht genau weiß, auf welchem Netzwerkknoten welche Benutzerinformation abgespeichert ist.

Gemäß einem weiteren Aspekt der vorliegenden Erfindung werden lediglich diejenigen Teilmengen von Benutzerinformationen entschlüsselt, welche angefragt werden. Dies hat den Vorteil, dass nicht stets die gesamten Benutzerinformationen entschlüsselt werden müssen, sondern vielmehr werden nur diejenigen Benutzerinformationen entschlüsselt, welche tatsächlich auch benötigt bzw. angefragt werden. Auf diese Art und Weise wird wiederum Rechenkapazität eingespart und es wird die Vertraulichkeit der Daten respektiert. Dies ist deshalb der Fall, da typischerweise nie alle Benutzerinformationen gleichzeitig entschlüsselt werden müssen.

Gemäß einem weiteren Aspekt der vorliegenden Erfindung wird der geheime Schlüssel unter Verwendung eines Skalarprodukts gebildet. Dies hat den Vorteil, dass vorhandene Implementierungen wiederverwendet werden können und der geheime Schlüssel auf eine Art und Weise erzeugt werden kann, die den Angreifer von vornherein nicht unbedingt klar ist. Somit ist nicht offengelegt, in welcher Weise der geheime Schlüssel erzeugt wird, und der Angreifer kann den geheimen Schlüssel schwer nacharbeiten.

Gemäß einem Aspekt der vorliegenden Erfindung wird der geheime Schlüssel unter Verwendung eines Fehlerkorrekturverfahrens gebildet. Dies hat den Vorteil, dass auch biometrische Merkmale erfindungsgemäß verwendet werden können, da diese oftmals kleinere Abweichungen aufweisen. So wird oftmals ein Fingerabdruck nicht stets in gleicher Weise gescannt, sondern vielmehr können kleinere Abweichungen entstehen, die dann mittels eines Fehlerkorrekturverfahrens behoben werden können. Somit erfolgt auch ein deterministisches Generieren des geheimen Schlüssels ausgehend von nicht sicheren Daten.

Gemäß einem weiteren Aspekt der vorliegenden Erfindung erfolgt das deterministische Generieren des geheimen Schlüssels in Abhängigkeit der Startinformation durch eine erste Instanz und das erneute Generieren des geheimen Schlüssels durch eine zweite Instanz, welche zu der ersten Instanz verschieden ist. Dies hat den Vorteil, dass eine erste Recheneinheit den geheimen Schlüssel zum Verschlüsseln erzeugt und eine zweite Recheneinheit den geheimen Schlüssel zum Entschlüsseln erzeugt. Folglich wird also der geheime Schlüssel auf unterschiedlichen Maschinen erzeugt, und es entsteht wiederum eine erhöhte Sicherheit. Bei der Instanz kann es sich um eine Recheneinheit, beispielsweise einen Server, handeln.

Gemäß einem weiteren Aspekt der vorliegenden Erfindung wird für den geheimen Schlüssel eine zeitliche Dauer spezifiziert, nach der der Schlüssel automatisiert gelöscht wird. Dies hat den Vorteil, dass der Schlüssel nur eine gewisse Zeit valide ist und sodann invalidiert wird. Folglich wird stets sichergestellt, dass der geheime Schlüssel nicht für einen Angreifer verfügbar ist. Hierdurch wird ein weiterer Sicherheitsmechanismus implementiert.

Gemäß einem weiteren Aspekt der vorliegenden Erfindung ist das Verfahren mittels Schnittstellen geeignet, mit bestehenden Systemen zu kommunizieren. Dies hat den Vorteil, dass beispielsweise eine Blockchain-Technologie angebunden werden kann, und insbesondere können Softwarekomponenten verwendet werden, welche beispielsweise das vorgeschlagene Verfahren in ein Bezahlsystem oder in ein Benutzerverwaltungssystem einbetten.

Gemäß einem weiteren Aspekt der vorliegenden Erfindung erfolgt das verteilte Abspeichern mittels einer kryptographisch verketteten Liste. Dies hat den Vorteil, dass eine Blockchain-Technologie Verwendung finden kann und die Benutzerinformationen aneinander gekettet werden können und folglich redundante Teilstücke dieser Kette abgespeichert werden können. Folglich können die Benutzerinformationen wiederum dezentral abgespeichert werden und gemäß der Blockchain-Technologie evaluiert werden.

Gemäß einem weiteren Aspekt der vorliegenden Erfindung erfolgt das verteilte Abspeichern der Teilmengen der Benutzerinformationen in einem Rechnernetzwerk. Dies hat den Vorteil, dass beispielsweise das Internet Verwendung finden kann, um die Benutzerinformationen weitläufig verteilt abzuspeichern. Folglich ist auch der Zugriff über das Rechnernetzwerk gewährleistet.

Die Aufgabe wird auch gelöst durch eine Systemanordnung zur dezentralen Identitätsverwaltung von Benutzern, aufweisend eine erste Recheneinheit eingerichtet zum deterministischen Generieren eines geheimen Schlüssels in Abhängigkeit einer Startinformation, eine zweite Recheneinheit eingerichtet zum Verschlüsseln von Teilmengen von bereitgestellten Benutzerinformationen in Abhängigkeit des geheimen Schlüssels, derart, dass alle Benutzerinformationen verschlüsselt werden, eine dritte Recheneinheit eingerichtet zum Verwerfen des geheimen Schlüssels, eine vierte Recheneinheit eingerichtet zum verteilten Abspeichern der Teilmengen der Benutzerinformationen und eine fünfte Recheneinheit eingerichtet zum erneuten Generieren des geheimen Schlüssels zum Entschlüsseln mindestens einer Teilmenge der bereitgestellten Benutzerinformationen.

Der Fachmann erkennt hierbei, dass die einzelnen Recheneinheiten teilweise als dieselbe Recheneinheit vorliegen können, insbesondere können die erste bis vierte Recheneinheit auf einem Server vorliegen und die fünfte Recheneinheit kann auf einem gesonderten Server vorliegen. Darüber hinaus erkennt der Fachmann, dass weitere Komponenten vorzuhalten sind, beispielsweise Komponenten, welche netzwerktypische Aufgaben übernehmen. Die Aufgabe wird auch gelöst durch ein Computerprogrammprodukt mit Steuerbefehlen, welche das Verfahren ausführen bzw. die vorgeschlagene Systemanordnung betreiben.

Erfindungsgemäß ist es besonders vorteilhaft, dass das Verfahren Verfahrensschritte bereitstellt, welche funktional von den strukturellen Merkmalen der Systemanordnung nachgebildet werden können. Die strukturellen Merkmale der Systemanordnung sind zudem geeignet, die Verfahrensschritte auszuführen bzw. diese funktional nachzubilden. Folglich ist das Verfahren geeignet, die Systemanordnung zu betreiben bzw. die Systemanordnung ist geeignet, das vorgeschlagene Verfahren auszuführen.

Weitere vorteilhafte Ausgestaltungen werden anhand der beigefügten Figuren näher erläutert. Es zeigen:
- Fig. 1:: ein schematisches Anwendungsbeispiel des vorgeschlagenen Verfahrens gemäß einem Aspekt der vorliegenden Erfindung; und
- Fig. 2:: ein schematisches Ablaufdiagramm des vorgeschlagenen Verfahrens zur dezentralen Identitätsverwaltung gemäß eines weiteren Aspekts der vorliegenden Erfindung.

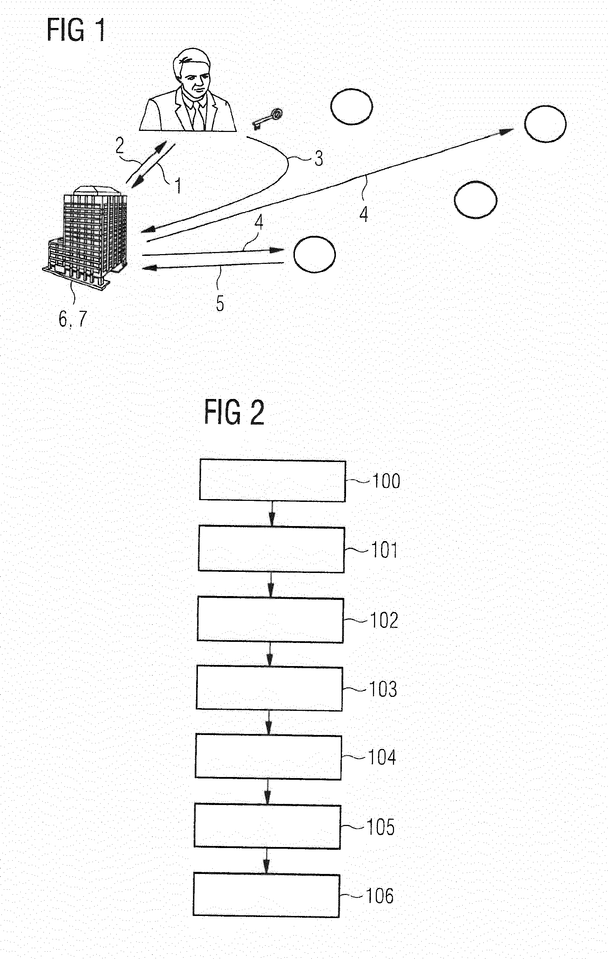

Fig. 1 zeigt oben links einen Benutzer, welcher eine Anfrage an einen Service 1 stellt. Sodann verlangt dieser Service nach einem geheimen Schlüssel 2. Der Benutzer übersendet dem Service den spezifischen Schlüssel 3, woraufhin der Service Daten aus dem Netzwerk anfrägt 4. Der am schnellsten antwortende Knotenpunkt sendet diese Daten 5. Und der Service entschlüsselt diese Daten anhand des bereitgestellten Schlüssels. Falls er diese Daten nicht entschlüsseln kann, so liegt eine Manipulation vor und das Verfahren terminiert. Das Entschlüsseln erfolgt vorliegend gemäß Bezugszeichen 6. Der Service bestätigt sodann die Eindeutigkeit des Schlüssels 7. Das vorgeschlagene Verfahren ist lediglich beispielhaft und wird im Folgenden näher erläutert.

Identitätsinformationen sollen dezentral abgespeichert werden. Hierfür werden jedoch nicht alle Informationen gesammelt verschlüsselt, sondern jeder Informationsblock einzeln (Name, Alter etc.). Die Informationen werden anhand eines privaten und öffentlichen Schlüsselpaares verschlüsselt. Der private Schlüssel wird anschließend nicht abgespeichert, sondern nach der Generierung verworfen. Trotzdem kann der private Schlüssel vom Benutzer anhand einer zufälligen Information (z.B. Zufallszahl) und beispielsweise einer biometrischen Kennung jederzeit neu generiert werden.

Die so verschlüsselten Daten werden nicht benutzerseitig abgelegt, sondern innerhalb eines verknüpften Netzwerkes verteilt. Jeder Knotenpunkt (andere Nutzer mit Speichermöglichkeit über Smartphone, PC o.ä.) erhält entweder alle Informationen oder Teile der verschlüsselten Informationen.

Bei einer benutzerseitig ausgelösten Transaktion wird zunächst eine Anfrage an den Serviceprovider (z.B. Online-Shop) gestellt, welche Informationen benötigt werden. Anschließend wird ein privater Schlüssel zu der jeweiligen Information (nicht aus der Information selbst, sondern aus einer z.B. vorher gespeicherten, der Information zugeordneten Zufallszahl und dem biometrischen Merkmal) generiert und an den Serviceprovider geschickt. Anschließend wird eine Anfrage nach der verschlüsselten Information an alle Knotenpunkte im Netzwerk geschickt. Das Netzwerk findet den aktuell am schnellsten verfügbaren Knotenpunkt und sendet die Informationen von hier aus an den Serviceprovider. Der Serviceprovider validiert nun mit dem erhaltenen privaten Schlüssel des Nutzers, ob die Anfrage berechtigt war. Kann der private Schlüssel die Informationen entschlüsseln ist die Anfrage auch gleichzeitig automatisch autorisiert und der Serviceprovider erhält die Informationen. Kann der private Schlüssel die Informationen nicht entschlüsseln, handelt es sich um eine unautorisierte Anfrage und die Informationen sind für den Serviceprovider unbrauchbar.

Die "Transaktionen" (Anforderung der Information, Erhalt des privaten Schlüssels, Erhalt der Informationen, Anfrage zur Löschung der Daten, Löschung der Daten, Update der Daten etc.) werden im Netzwerk festgehalten und alle/eine ausreichend große Zahl Knotenpunkte erhalten eine Kopie der Transaktionsinformationen (ähnlich eines Smart-Contract in der Blockchain).

Updates der jeweiligen Benutzerinformation sind nur vom Benutzer selbst möglich. Dies wird durch Neu-Generierung des Schlüsselpaares und anschließender Verschlüsselung der Informationen erreicht. Die so erhaltenen neu-verschlüsselten Informationen werden wiederum an alle oder viele der Knotenpunkte gesendet und ersetzen die vorherige (veraltete) Information.

Eine Löschung des jeweiligen Schlüssels auf Service-Provider Seite kann auch über eine Aufforderung des Nutzers oder eine vorher terminierte, automatische Löschung des Schlüssels erfolgen (z.B. über einen Smart-Contract) .

Die Identitätslösung kann mithilfe einer Blockchain und Smart-Contracts gelöst werden.

Für die Schlüsselgenerierung wird für jede Information eine Zufallszahl oder eine Zufallsmatrix erzeugt, die benutzerseitig gespeichert wird. Anschließend werden aus einem biometrischen Merkmal (z.B. dem Fingerabdruck) Vektoren/Werte erzeugt. Anschließend wird beispielsweise über das Skalarprodukt der beiden Vektoren ein Schlüsselpaar generiert mit dem die Informationen verschlüsselt werden können. Die biometrische Information wird anschließend verworfen. Zur Rückgewinnung des privaten Schlüssels werden die gespeicherte Zufallsmatrix/-zahl und das neuextrahierte biometrische Merkmal benutzt. Eine Voraussetzung für dieses Verfahren ist, dass das biometrische Merkmal immer zur selben Matrix führt. Dies ist über verschiedene Fehlerkorrekturverfahren (Bose-Chaudhuri-Hocquenghem, Reed-Solomon etc.) möglich.

Vorteile gegenüber aktuellen Lösungen ergeben sich v.a. durch...
a) ... die schwere Manipulierbarkeit der Transaktionsinformationen (durch die dezentrale Speicherung in allen/ oder vielen Knotenpunkten im Netzwerk);
b) ... die Tatsache, dass potentielle Angreifer den privaten Schlüssel nicht direkt angreifen können, da er nicht gespeichert wird;
c) ... die Speicherung der verschlüsselten Informationen auf vielen dezentralen Knotenpunkten, was zu weniger Datenverlusten führt;
d) ... der Nutzer kann auf Basis der jeweiligen Anfrage des Serviceproviders entscheiden, welche Informationen er ihm zukommen lässt;
e) ... die verschlüsselten Informationen sind weniger attraktiv für Angreifer, da die Informationen ohne den privaten Schlüssel nutzlos sind;
f) ... der Nutzer muss sich keine Passwörter merken und keinen Wert auf deren sichere Verwaltung legen; und
g) ... die Authentisierung erfolgt direkt auf Seite des Serviceproviders, der sich dementsprechend sicher sein kann, dass die Anfrage auch von einem autorisierten Nutzer stammt.

Fig. 2 zeigt in einem schematischen Ablaufdiagramm ein Verfahren zur dezentralen Identitätsverwaltung von Benutzern, aufweisend ein deterministisches Generieren 100 eines geheimen Schlüssels in Abhängigkeit einer Startinformation, ein Verschlüsseln 101 von Teilmengen von bereitgestellten 102 Benutzerinformationen in Abhängigkeit des geheimen Schlüssels, derart, dass alle Benutzerinformationen verschlüsselt werden, ein Verwerfen 103 des geheimen Schlüssels, ein verteiltes Abspeichern 104 der Teilmengen der Benutzerinformationen, und ein erneutes Generieren 105 des geheimen Schlüssels zum Entschlüsseln 106 mindestens einer Teilmenge der bereitgestellten 102 Benutzerinformationen.

Der Fachmann erkennt hierbei, dass einzelne Verfahrensschritte iterativ und/oder in anderer Reihenfolge ausgeführt werden können. Zudem können Unterschritte vorzusehen sein. Beispielsweise kann das verteilte Abspeichern iterativ erfolgen, und es kann beispielsweise zuerst ein verteiltes Abspeichern durchgeführt werden und sodann ein Verwerfen des geheimen Schlüssels.

## Patentansprüche

1. Verfahren zur dezentralen Identitätsverwaltung von Benutzern, aufweisend:
- deterministisches Generieren (100) eines geheimen Schlüssels in Abhängigkeit einer Startinformation;
- Verschlüsseln (101) von Teilmengen von bereitgestellten (102) Benutzerinformationen mittels des geheimen Schlüssels, derart, dass alle Benutzerinformationen verschlüsselt werden;
- Verwerfen (103) des geheimen Schlüssels;
- verteiltes Abspeichern (104) der verschlüsselten Teilmengen der Benutzerinformationen; und
- erneutes Generieren (105) des geheimen Schlüssels zum Entschlüsseln (106) mindestens einer der verschlüsselten Teilmengen der bereitgestellten (102) Benutzerinformationen.

2. Verfahren nach Anspruch 1, **dadurch gekennzeichnet, dass** die Startinformation als eine Zufallszahl, eine Zufallsmatrix und/ oder ein biometrisches Merkmal vorliegt.

3. Verfahren nach Anspruch 1 oder 2, **dadurch gekennzeichnet, dass** das Verwerfen (103) des geheimen Schlüssels ein Löschen, ein Überschreiben, ein Verändern und/ oder ein Verschleiern des Schlüssels umfasst.

4. Verfahren nach einem der vorhergehenden Ansprüche, **dadurch gekennzeichnet, dass** das verteilte Abspeichern (103) redundant erfolgt.

5. Verfahren nach Anspruch 4, **dadurch gekennzeichnet, dass** bei einem Aktualisieren der Teilmengen der Benutzerinformationen alle redundant abgespeicherten Instanzen aktualisiert werden.

6. Verfahren nach einem der vorhergehenden Ansprüche, **dadurch gekennzeichnet, dass** lediglich diejenigen verschlüsselten Teilmengen von Benutzerinformationen entschlüsselt (106) werden, welche angefragt werden.

7. Verfahren nach einem der vorhergehenden Ansprüche, **dadurch gekennzeichnet, dass** der geheime Schlüssel unter Verwendung eines Skalarprodukts gebildet wird.

8. Verfahren nach einem der vorhergehenden Ansprüche, **dadurch gekennzeichnet, dass** der geheime Schlüssel unter Verwendung eines Fehlerkorrekturverfahrens gebildet wird.

9. Verfahren nach einem der vorhergehenden Ansprüche, **dadurch gekennzeichnet, dass** das deterministische Generieren (100) des geheimen Schlüssels in Abhängigkeit der Startinformation durch eine erste Instanz erfolgt und das erneute Generieren (105) des geheimen Schlüssels durch eine zweite Instanz, welche der ersten Instanz verschieden ist, erfolgt.

10. Verfahren nach einem der vorhergehenden Ansprüche, **dadurch gekennzeichnet, dass** für den geheimen Schlüssel eine zeitliche Dauer spezifiziert wird, nach der der Schlüssel automatisiert gelöscht wird.

11. Verfahren nach einem der vorhergehenden Ansprüche, **dadurch gekennzeichnet, dass** das Verfahren mittels Schnittstellen geeignet ist, mit bestehenden Systemen zu kommunizieren.

12. Verfahren nach einem der vorhergehenden Ansprüche, **dadurch gekennzeichnet, dass** das verteilte Abspeichern (104) mittels einer kryptographisch verketteten Liste erfolgt.

13. Verfahren nach einem der vorhergehenden Ansprüche, **dadurch gekennzeichnet, dass** das verteilte Abspeichern (104) der verschlüsselten Teilmengen der Benutzerinformationen in einem Rechnernetzwerk erfolgt.

14. Systemanordnung zur dezentralen Identitätsverwaltung von Benutzern, aufweisend:
- eine erste Recheneinheit eingerichtet zum deterministischen Generieren (100) eines geheimen Schlüssels in Abhängigkeit einer Startinformation;
- eine zweite Recheneinheit eingerichtet zum Verschlüsseln (101) von Teilmengen von bereitgestellten (102) Benutzerinformationen mittels des geheimen Schlüssels, derart, dass alle Benutzerinformationen verschlüsselt werden;
- eine dritte Recheneinheit eingerichtet zum Verwerfen (103) des geheimen Schlüssels;
- eine vierte Recheneinheit eingerichtet zum verteilten Abspeichern (104) der verschlüsselten Teilmengen der Benutzerinformationen; und
- eine fünfte Recheneinheit eingerichtet zum erneuten Generieren (105) des geheimen Schlüssels zum Entschlüsseln (106) mindestens einer der verschlüsselten Teilmengen der bereitgestellten (102) Benutzerinformationen.

15. Computerprogrammprodukt mit Steuerbefehlen, welche das Verfahren gemäß einem der Ansprüche 1 bis 13 ausführen, wenn sie auf einem Computer zur Ausführung gebracht werden

## Claims

1. A method for decentralized identity management of users, having:
- a deterministic generating (100) of a secret key in dependence on a start information;
- an encrypting (101) of subsets of supplied (102) user information by means of the secret key such that all user information items is encrypted;
- a discarding (103) of the secret key;
- a distributed storing (104) of the encrypted subsets of the user information items; and
- a regenerating (105) of the secret key for the decrypting (106) of at least one of the encrypted subsets of the supplied (102) user information items.

2. The method according to claim 1, **characterized in that** the start information is present as a random number, a random matrix and/ or a biometric feature.

3. The method according to claim 1 or 2, **characterized in that** the discarding (103) of the secret key comprises an erasing, an overwriting, a changing and/or an obfuscating of the key.

4. The method according to any of the preceding claims, **characterized in that** the distributed storing (103) is effected in a redundant manner.

5. The method according to claim 4, **characterized in that** upon an updating of the subsets of the user information items all the redundantly stored instances are updated.

6. The method according to any of the preceding claims, **characterized in that** only those encrypted subsets of user information items are decrypted (106) which are requested.

7. The method according to any of the preceding claims, **characterized in that** the secret key is formed while employing an inner product.

8. The method according to any of the preceding claims, **characterized in that** the secret key is formed while employing an error-correcting method.

9. The method according to any of the preceding claims, **characterized in that** the deterministic generating (100) of the secret key is effected in dependence on the start information by a first instance and the regenerating (105) of the secret key is effected by a second instance which is different from the first instance.

10. The method according to any of the preceding claims, **characterized in that** a time duration is specified for the secret key after which the key is automatically deleted.

11. The method according to any of the preceding claims, **characterized in that** the method is suitable for communicating with existing systems by means of interfaces.

12. The method according to any of the preceding claims, **characterized in that** the distributed storing (104) is effected by means of a cryptographically concatenated list.

13. The method according to any of the preceding claims, **characterized in that** the distributed storing (104) of the encrypted subsets of the user information items is effected in a computer network.

14. A system arrangement for decentralized identity management of users, having:
- a first computing unit configured for the deterministic generating (100) of a secret key in dependence on a start information;
- a second computing unit configured for the encrypting (101) of subsets of supplied (102) user information items by means of the secret key such that all user information is encrypted;
- a third computing unit configured for the discarding (103) of the secret key;
- a fourth computing unit configured for the distributed storing (104) of the encrypted subsets of the user information items; and
- a fifth computing unit configured for the regenerating (105) of the secret key for decrypting (106) at least one of the encrypted subsets of the supplied (102) user information items.

15. A computer program product having control commands which execute the method according to any of claims 1 to 13 when they are executed on a computer.

## Revendications

1. Procédé de gestion décentralisée de l'identité d'utilisateurs, comportant :
- génération (100) déterministe d'une clé secrète en fonction d'une information de démarrage ;
- cryptage (101) de sous-ensembles d'informations utilisateur mises à disposition (102), au moyen de la clé secrète, de telle façon que toutes les informations utilisateur sont cryptées ;
- rejet (103) de la clé secrète ;
- mémorisation répartie (104) des sous-ensembles cryptés des informations utilisateur ; et
- nouvelle génération (105) de la clé secrète pour le décryptage (106) d'au moins un des sous-ensembles cryptés des informations utilisateur mises à disposition (102).

2. Procédé selon la revendication 1, **caractérisé en ce que** l'information de démarrage se trouve sous forme d'un nombre aléatoire, d'une matrice aléatoire et/ou d'une caractéristique biométrique.

3. Procédé selon la revendication 1 ou 2, **caractérisé en ce que** le rejet (103) de la clé secrète comprend un effaçage, une écrasement, une modification et/ou un masquage de la clé.

4. Procédé selon une des revendications précédentes, **caractérisé en ce que** la mémorisation répartie (103) a lieu de manière redondante.

5. Procédé selon la revendication 4, **caractérisé en ce que**, lors d'une actualisation des sous-ensembles des informations utilisateur, toutes les instances mémorisées de manière redondante sont actualisées.

6. Procédé selon une des revendications précédentes, **caractérisé en ce que** seulement les sous-ensembles cryptés d'informations utilisateur demandés sont décryptés (106).

7. Procédé selon une des revendications précédentes, **caractérisé en ce que** la clé secrète est constituée en utilisant un produit scalaire.

8. Procédé selon une des revendications précédentes, **caractérisé en ce que** la clé secrète est constituée en utilisant un procédé de correction d'erreur.

9. Procédé selon une des revendications précédentes, **caractérisé en ce que** la génération (100) déterministe de la clé secrète a lieu par une première instance en fonction de l'information de démarrage, et la nouvelle génération (105) de la clé secrète a lieu par une deuxième instance différente de la première instance.

10. Procédé selon une des revendications précédentes, **caractérisé en ce que**, pour la clé secrète, une durée temporelle est spécifiée, suivant laquelle la clé est effacée de manière automatisée.

11. Procédé selon une des revendications précédentes, **caractérisé en ce que** le procédé est, au moyen d'interfaces, adapté à communiquer avec des systèmes existants.

12. Procédé selon une des revendications précédentes, **caractérisé en ce que** la mémorisation répartie (104) a lieu au moyen d'une liste concaténée cryptographiquement.

13. Procédé selon une des revendications précédentes, **caractérisé en ce que** la mémorisation répartie (104) des sous-ensembles cryptés des informations utilisateur a lieu dans un réseau d'ordinateurs.

14. Agencement de système pour la gestion décentralisée de l'identité d'utilisateurs, comportant :
- une première unité de calcul conçue pour la génération (100) déterministe d'une clé secrète en fonction d'une information de démarrage ;
- une deuxième unité de calcul conçue pour le cryptage (101) de sous-ensembles d'informations utilisateur mises à disposition (102), au moyen de la clé secrète, de telle façon que toutes les informations utilisateur sont cryptées ;
- une troisième unité de calcul conçue pour le rejet (103) de la clé secrète ;
- une quatrième unité de calcul conçue pour la mémorisation répartie (104) des sous-ensembles cryptés des informations utilisateur ; et
- une cinquième unité de calcul conçue pour la nouvelle génération (105) de la clé secrète pour le décryptage (106) d'au moins un des sous-ensembles cryptés des informations utilisateur mises à disposition (102).

15. Produit programme d'ordinateur ayant des instructions de commande qui exécutent le procédé suivant une des revendications de 1 à 13 quand elles sont mises à exécution sur un ordinateur.
